(19) Europäisches Patentamt
European Patent Office
Office européen des brevets

(11) Numéro de publication : **0 287 478 B1**

(12) # FASCICULE DE BREVET EUROPEEN

(45) Date de publication du fascicule du brevet : **13.05.92 Bulletin 92/20**

(51) Int. Cl.$^5$ : **C08G 77/38**

(21) Numéro de dépôt : **88420058.5**

(22) Date de dépôt : **22.02.88**

(54) **Procédé de préparation de diamines aromatiques à groupement polydiorganosiloxane.**

(30) Priorité : **24.02.87 FR 8702614**

(43) Date de publication de la demande : **19.10.88 Bulletin 88/42**

(45) Mention de la délivrance du brevet : **13.05.92 Bulletin 92/20**

(84) Etats contractants désignés : **AT BE CH DE ES FR GB IT LI LU NL SE**

(56) Documents cités : **GB-A- 1 409 742**

(73) Titulaire : **RHONE-POULENC CHIMIE
25, quai Paul Doumer
F-92408 Courbevoie Cédex (FR)**

(72) Inventeur : **Barthelemy, Pascal
21, rue de la Part-Dieu
F-69003 Lyon (FR)**

(74) Mandataire : **Trolliet, Maurice et al
RHONE-POULENC INTERSERVICES Service Brevets Chimie Centre de Recherches des Carrières B.P. 62
F-69192 Saint-Fons Cédex (FR)**



Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne un nouveau procédé de préparation de diamines aromatiques possédant dans leur structure un groupement polydiorganosiloxane. Plus précisément, elle concerne un nouveau procédé de préparation d'alpha, oméga-bis(aminophénoxyalkyl)polydiorganosiloxanes.

Ces diamines sont des composés qui sont bien connus de l'art antérieur. Elles sont par exemple décrites dans le brevet anglais GB-B-1.062.418 et dans le brevet américain US-A-4.395.527 ; on peut les représenter par la formule générale suivante :

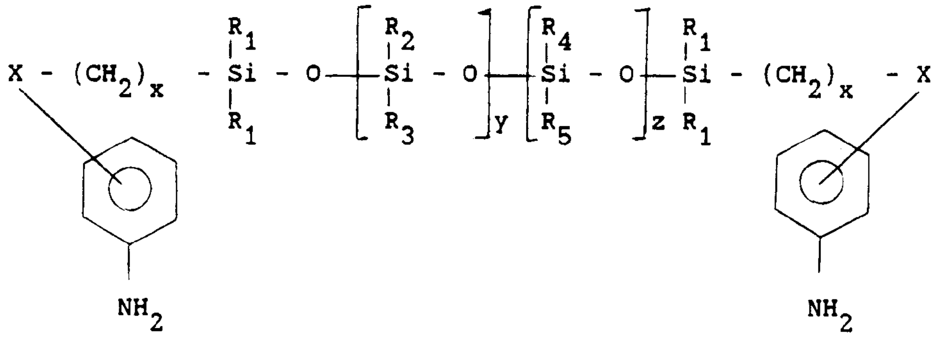

dans laquelle :

. X, qui est en position ortho, méta ou para par rapport à l'atome de carbone du cycle benzénique relié à l'azote, représente par exemple un atome ou groupement suivant :

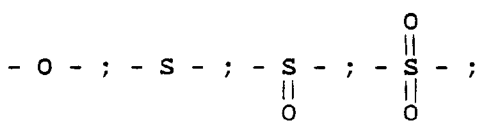

. $R_1$, $R_2$, $R_3$, $R_4$ et $R_5$, identiques ou différents, représentent chacun, par exemple, un radical hydrocarboné monovalent choisi parmi : les radicaux alkyles, linéaires ou ramifiés, ayant de 1 à 12 atomes de carbone, ces radicaux pouvant être substitués par un ou plusieurs atomes de chlore, de brome ou de fluor ou par un groupement - CN ; un radical phényle éventuellement substitué par un ou plusieurs radicaux alkyles et/ou alkoxy ayant de 1 à 4 atomes de carbone ou par un ou plusieurs atomes de chlore ;

. le symbole x est un nombre entier situé dans l'intervalle allant par exemple de 2 à 8.

. les symboles y et z représetent des nombres, identiques ou différents, entiers ou fractionnaires, dont la somme est inférieure à 100.

pour un composé de ce type, lorsque y et/ou z sont supérieurs à 1, on est en préYence d'un composé à structure polymère et on a rarement un seul composé, mais le plus souvent un mélange de composés de même structure chimique qui différent par le nombre d'unités récurrentes de leur molécule ; cela conduit à une valeur moyenne de y et/ou z qui peut être entière ou fractionnaire.

L'intérêt pratique de ces diamines à groupement polydiorganosiloxane réside dans la possibilité de les utiliser comme additifs dans des compositions lubrifiantes ou de revêtement de surface, ou dans d'autres applications, par exemple, comme intermédiaires pour la préparation de copolymères.

Selon les brevets précités, une première méthode de préparation de ces diamines, applicable en particulier lorsque l'on peut obtenir un composé où y = z = 0, c'est à dire lorsque l'on peut obtenir une diamine à groupement polydiorganosiloxane, consiste à faire réagir un composé de formule

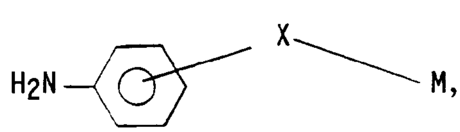

où X à la signification donnée ci-avant et M est un métal alcalin ou alcalino-terreux, avec un bis(halogénoalkyl)disiloxane de formule :

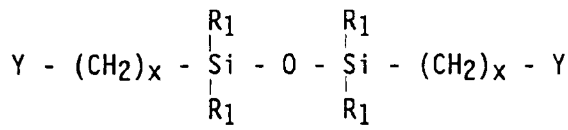

où x à la valeur indiquée ci-avant et Y est atome de chlore, de brome ou d'iode, en opérant à une température comprise entre 20° et 200° C en présence d'un solvent polaire aprotique.

Dans le cas où l'on veut obtenir une diamine où y et/ou z sont différents de zéro, une seconde méthode de préparation enseignée par ces brevets consiste à copolymériser une mole de diamine à groupement diorganodisiloxane, préparée comme indiqué ci-dessus, avec une quantité d'un ou plusieurs polydiorganosiloxanes cycliques capables de donner y moles de groupes siloxy de formule :

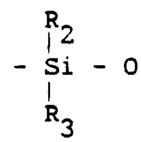

et/ou z moles de groupes siloxy de formule :

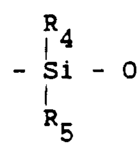

En général, la réaction se déroule à une température comprise entre 80° et 250° C en présence là aussi d'un solvant et éventuellement d'un catalyseur approprié.

Ces procédés présentent cependant un certain nombre d'inconvénients qui sont de nature à minimiser l'intérêt industriel qu'ils peuvent présenter. On observe que la majorité des synthèses est faite en solution dans un milieu solvant organique, ce qui implique généralement de prévoir, en fin de réaction, d'une part une ou plusieurs étapes supplémentaires de distillation sous pression réduite pour éliminer le solvant de réaction et, d'autre part, un appareillage complémentaire approprié pour récupérer le solvant éliminé et le purifier avant son ré-emploi. On note par ailleurs, en examinant le détail des modes opératoires proposés par exemple dans les brevets précités, pour préparer des alpha, oméga-bis(aminophénoxylalkyl)polysiloxanes, que les températures et les durées de réaction pratiquement, utilisées sont généralement assez élevées : il faut compter d'une part 7 à 8 heures de réaction entre 110° et 122° C pour préparer le réactif de départ de formule

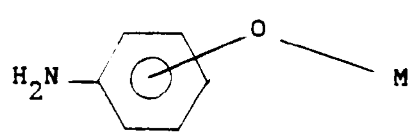

et d'autre part, environ 16 heures de réaction supplémentaires après ajout du bis(halogénoalkyl)disiloxane dans le milieu réactionnel. Enfin, il ressort des brevets cités que les rendements en diamine souhaitée ne semblent pas excéder 85 %.

Poursuivant des travaux dans ce domaine de la technique, la Demanderesse a maintenant trouvé et mis au point, et c'est ce qui constitue l'objet de la présente invention, un nouveau procédé de préparation de diamines possédant dans leur structure un groupement polydiorganosiloxane qui est simple et facile à mettre en oeuvre : il est opéré à une température peu élevée, en une seule étape, en faisant appel à un seul et unique appareil et la durée de réaction est généralement courte. D'autres avantages de ce procédé apparaîtront dans la description détaillée qui va suivre.

Conformément à ce nouveau procédé, on prépare des alpha, oméga-bis(aminophénoxyalkyl)polydiorganosiloxanes qui sont obtenus par hydrosilylation directe en masse d'allylamines aromatiques par différents alpha, oméga-bis(hydrogéno)polydiorganosiloxanes en présence de catalyseur.

Plus précisément, la présente invention concerne un procédé amélioré de préparation de diamines à groupement polydiorganosiloxane de formule générale :

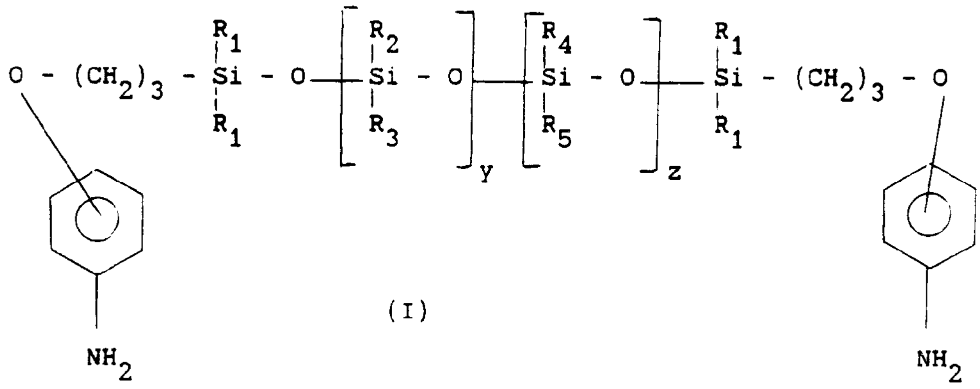

(I)

dans laquelle

. l'oxygène du groupe phénoxy alkyle est en position ortho, méta ou para par rapport à l'atome de carbone du cycle benzénique relié à l'azote :

. $R_1$, $R_2$, $R_3$, $R_4$ et $R_5$, identiques ou différents, représentent chacun un radical hydrocarboné monovalent choisi parmi : les radicaux alkyles, linéaires ou ramifiés, ayant de 1 à 12 atomes de carbone, ces radicaux pouvant être substitués par un ou plusieurs atomes de chlore, de brome ou de fluor ou par un groupement - CN ; un radical phényle éventuellement substitué par un ou plusieurs radicaux alkyles et/ou alkoxy ayant de 1 à 4 atomes de carbone ou par un ou plusieurs atomes de chore ;

. les symboles y et z représentent des nombres, identiques ou différents, entiers ou fractionnaires, dont la somme est inférieure à 100 ;

ce procédé étant caractérisé en ce que l'on fait réagir directement:

– (a) un alpha, oméga-bis(hydrogéno)polydiorganosiloxane de formule :

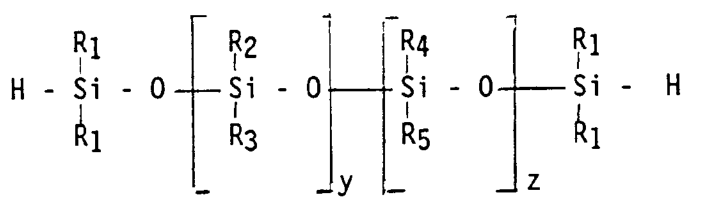 (II)

dans laquelle $R_1$, $R_2$, $R_3$, $R_4$ ,$R_5$, y et z ont les significations données ci-avant à propos de la formule (I),

– sur (b) une allyloxyaniline de formule:

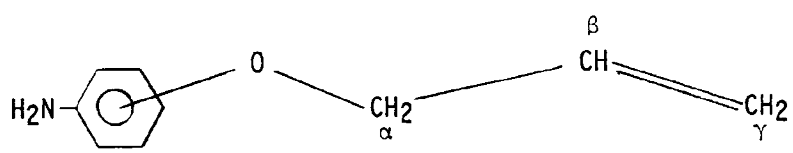 (III)

dans laquelle le radical allyloxy est en position ortho, méta ou para par rapport à l'atome de carbone du cycle benzénique relié à l'azote,

– cette réaction d'hydrosilylation étant conduite en opérant en masse en absence de solvant, à une température ne dépassant pas 120° C et en présence d'un catalyseur consistant dans un métal du groupe platine pris sous forme métallique ou sous forme d'un composé à base d'un métal du groupe du platine.

Les alpha, oméga-bis(hydrogéno)polydiorganosiloxanes de formule (II) mis en oeuvre sont des produits bien connus dans l'industrie des silicones et sont, pour certains (les composés totalement alkylés), disponibles dans le commerce. Ils sont par exemple décrits dans les brevets français FR-A1-2.486.952 et FR-A5-2.058.988. Dans le cas où ces produits ne sont pas disponibles dans le commerce, on peut les préparer par exemple par polymérisatiion cationique d'huiles polydiorganosiloxanes alpha, oméga-bishydroxylées appropriées suivie d'une réaction de transfert par un agent tel que notamment un dihydrogénotétraalkyldisiloxane.

En ce qui concerne le réactif (b), il est choisi parmi l'orthoallyloxyaniline, la métaallyloxyaniline et la paraallyloxyaniline.

Ces composés peuvent être préparés selon les procédés décrits dans les références suivantes : Journal of American Chemical Society, 70, pages 592 à 594 (1948) ; Chemical Abstracts, 51, 4423 C (1957) ; Journal of American Chemical Society, 44, pages 1741 à 1744 (1922) ; Bulletin de la Société Chimique de France 1962, pages 2154 à 2157.

Dans le procédé selon la présente invention , le réactif (b) est généralement utilisé en quantités précisément égales à deux moles par mole de réactif (a). On ne sortirait cependant pas du cadre de l'invention en utilisant des quantités de réactifs (a) et (b) telles que le rapport molaire réactif (b) / réactif (a) se situe dans l'intervalle allant par exemple de 1,90/1 à 2,1/1 ; dans ces conditions, quand le rapport considéré est supérieur à 2/1 ou inférieur à 2/1, le réactif non réagi joue alors le rôle d'un diluant.

En ce qui concerne le catalyseur, l'expression "métal du groupe du platine " signifie que l'on peut faire appel à l'un quelconque des six métaux suivants du groupe VIII de la classification périodique des éléments : ruthénium, rhodium, palladium, osmium, iridium et platine. Le catalyseur peut être un métal du groupe du platine sous forme métallique, de préférence déposé sur des supports divers tels que le noir de carbone, le carbonate de calcium, les alumines ou des matériaux équivalents. Comme composé à base d'un métal du groupe du platine, on fait appel à des composés capables de passer en solution dans le milieu réactionnel. Le reste lié au métal n'est pas critique dès l'instant qu'il satisfait à ces conditions. Parmi ces composés on citera à titre illustratif les dérivés minéraux ou organiques dans lesquels l'atome de métal peut se trouver à différents états d'oxydation tels que notamment des sels d'hydracides minéraux, des sels d'oxyacide minéraux, des sels d'acides mono-ou polycarboxyliques aliphatiques, des sels complexes obtenus à partir des sels précédemment cités et de ligands mon-ou polydentates et des complexes à base de métal élémentaire et de ligands mono-ou polydentates. Des catalyseurs de ce type sont par exemple décrits dans le FR-A5-2.058.988.

Pour la mise en oeuvre de la présente invention, on utilise de préférence un catalyseur consistant dans du platine pris sous forme métallique ou sous forme d'un composé à base de platine. Plus préférentiellement encore, on fait appel à des complexes à base de platine élémentaire et de ligands du type alpha, oméga-bis(vinyl)polydiorganosiloxane. Un catalyseur qui convient tout particulièrement bien consiste dans le complexe à base de platine élémentaire et de divinyl-1,3 tétraméthyl-1,1,3,3 disiloxane, communément appelé catalyseur de Karsted.

La quantité de catalyseur utilisée est choisie de manière que le rapport r ci-après défini :

$$\frac{\text{poids de métal élémentaire du groupe du platine contenu dans le catalyseur}}{\text{poids total des réactifs (a) + (b)}}$$

se situe dans l'intervalle allant de $7.10^{-6}$ à $200.10^{-6}$. Pour des concentrations aussi faibles que $7.10^{-6}$, la réaction d'hydrosilylation a bien entendu lieu, mais les durées de réaction peuvent être trop longues et n'être pas compatibles avec un procédé industriel ; on utilise donc de préférence, pour des raisons d'ordre économique, une quantité de catalyseur pour laquelle le rapport r se situe dans l'intervalle allant de $20.10^{-6}$ à $100.10^{-6}$.

Le catalyseur peut être introduit dans le milieu de réaction soit sous la forme dans laquelle il se trouve naturellement, soit sous forme de suspension ou de solution dans un diluant liquide approprié. Dans le cas du catalyseur très préféré consistant dans un complexe à base de platine et d'un ligand siloxane, on met en oeuvre généralement ce dernier sous forme de solution dans un hydrocarbure tel que par exemple le benzène, le toluène, le cyclohexane.

Dans le procédé qui vient d'être décrit , le taux de transformation des réactifs de départ est de 100 % et les diamines de formule (I) obtenues présentent une pureté qui atteint dans un grande majorité de cas une valeur de 100 %. Cela indique que la réaction d'addition des groupes fonctionnels

$$H - \overset{|}{\underset{|}{Si}}$$

sur le substrat allyloxyaniline se fait pratiquement avec une sélectivité de 100 % sur le carbone ($\gamma$) de la formule (III). Par ailleurs, on n'observe pas d'empoisonnement du catalyseur mis en oeuvre, quelle que soit sa concentration dans le milieu réactionnel. Il s'agit là de résultats tout à fait inattendus au regard de l'art antérieur. En effet, dans ce genre de chimie, l'enseignement de l'art antérieur laisse penser que l'on aurait dû s'attendre au développement d'au moins deux réactions parasites importantes consistant, l'une, dans l'addition des groupes fonctionnels

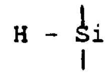

sur le carbone (β) du substrat de formule (III) et, l'autre, dans la réaction des groupes

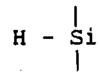

sur la fonction $NH_2$ terminale de l'allyloxyaniline. L'hydrosilylation de composés contenant des groupes insaturés a été étudiée en détail dans la littérature. En particulieur, en ce qui concerne l'allylamine :

$$NH_2 - CH_2 - CH = CH_2$$

α β γ

et ses dérivés N-substitués, on enseigne dans l'ouvrage : Organometallic Chemistry Reviews, édité en 1977 par Elsevier Scientific Publishing Company, pages 52 et 53 et références citées, que, lorsque le catalyseur utilisé est un dérivé du platine, l'hydrosilylation de ce substrat par $H - Si (OC_2H_5)_3$ conduit à un mélange d'isomères par additions sur les carbones (β) et (γ) pour obtenir d'une part le composé $NH_2 - CH_2 - CH(CH_3) - Si (OC_2H_5)_3$ (20 %) et d'autre part le composé $NH_2 - CH_2 - CH_2 - CH_2 - Si (OC_2H_5)_3$ (80 %) ; on enseigne encore dans ce passage qu'il peut se développer aussi une réaction de N-silylation conduisant au composé $(C_2H_5O)_3Si - NH - CH_2 - CH_2 - CH_2 - Si(OC_2H_5)_3$. En ce qui concerne une allylamine aromatique comme :

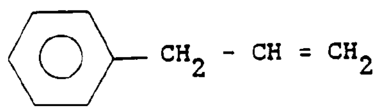

l'ouvrage précité enseigne aussi (cf.pages 34 à 36) que l'addition de $H\text{-}Si(C_2H_5)_3$ peut conduire, comme dans le cas de l'allylamine, à la formation de deux isomères

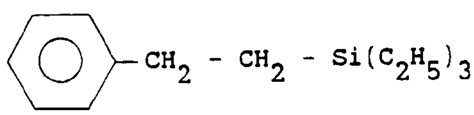

et

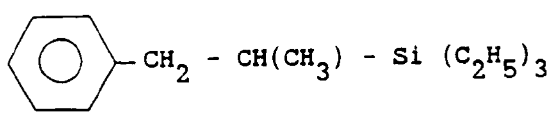

A propos du catalyseur d'hydrosilylation, on peut encore noter dans l'ouvrage précité, à la page 4, que d'une façon assez générale la présence d'amines diverses est réputée comme étant de nature à inhiber son action en faveur de la réaction d'hydrosilylation.

Comme diamines préférentiellement représentatives des composés préparés conformément au procédé selon la présente invention, on peut citer celles qui répondent à la formule (I) dans laquelle :

1. $R_1$, $R_2$, $R_3$, $R_4$ et $R_5$, identiques ou différents, représentent chacun un radical alkyle, linéaire ou ramifié, ayant de 1 à 6 atomes de carbone ; y + z se situe dans l'intervalle allant de 0 à 100 et, de préférence, de 4 à 70.
2. $R_1$, $R_2$, $R_3$, identiques ou différents, représentent chacun un radical alkyl linéaire ou ramifié, ayant de 1 à 6 atomes de carbone ; $R_4$, $R_5$ représentent chacun un radical phényle ; y + z se situe dans l'intervalle allant de 0 à 100 et, de préférence, de 4 à 70.
3. $R_1$, $R_2$, $R_4$, identiques ou différents, représentent chacun un radical alkyle, linéaire ou ramifié, ayant de

1 à 6 atomes de carbone ; $R_3$, $R_5$ représentent chacun un radical phényle ; y + z se situe dans l'intervalle allant de 0 à 100 et, de préférence, de 4 à 70.

4. $R_1$ représente un radical alkyle linéaire ou ramifié, ayant de 1 à 6 atomes de carbone ; $R_2$, $R_3$, $R_4$ et $R_5$ représentent chacun un radical phényle ; y + z se situe dans l'intervalle allant de 0 à 100 et, de préférence, de 4 à 70.

Comme diamines encore plus préférentiellement représentatives des composé préparés conformément au procédé selon la présente invention, on peut citer celles qui répondent à la formule (I) dans laquelle :

5. $R_1 = R_2 = R_3 = R_4 = R_5$ = radical alkyle linéaire ayant de 1 à 3 atomes de carbone ; y + z se situe dans l'intervalle allant de 0 à 100 et, de préférence, de 4 à 70.

6. $R_1 = R_2 = R_3$ = radical alkyle linéaire ayant de 1 à 3 atomes de carbone ; $R_4 = R_5$ radical phényle ; y + z se situe dans l'intervalle allant de 0 à 100 et, de préférence, de 4 à 70.

7. $R_1 = R_2 = R_4$ = radical alkyle linéaire ayant de 1 à 3 atomes de carbone ; $R_3 = R_5$ = un radical phényle ; y + z se situe dans l'intervalle allant de 0 à 100 et, de préférence, de 4 à 70.

8. $R_1$ = radical alkyle linéaire ayant de 1 à 3 atomes de carbone ; $R_2 = R_3 = R_4 = R_5$ = radical phényle ; y + z se situe dans l'intervalle allant de 0 à 100 et, de préférence, de 4 à 70.

Comme diamines qui sont tout particulièrement représentatives des composés préparés conformément au procédé selon la présente invention, on peut citer celles qui répondent à la formule (I) dans laquelle :

9. $R_1 = R_2 = R_3 = R_4 = R_5$ = radical méthyle ; y + z se situe dans l'intervalle allant de 0 à 100 et, de préférence, de 4 à 70.

10. $R_1 = R_2 = R_3$ = radical méthyle ; $R_4 = R_5$ = radical phényle ; y + z se situe dans l'intervalle allant de 0 à 100 et, de préférence, de 4 à 70.

11. $R_1 = R_2 = R_4$ = radical méthyle ; $R_3 = R_5$ = radical phényle ; y + z se situe dans l'intervalle allant de 0 à 100 et, de préférence, de 4 à 70.

12. $R_1$ = radical méthyle ; $R_2 = R_3 = R_4 = R_5$ = radical phényle ; y + z se situe dans l'intervalle allant de 0 à 100 et, de préférence, de 4 à 70.

Comme exemples spécifiques de diamines qui sont tout particulièrement représentatives des composés préparés conformément au procédé selon la présente invention, on citera notamment :

13. 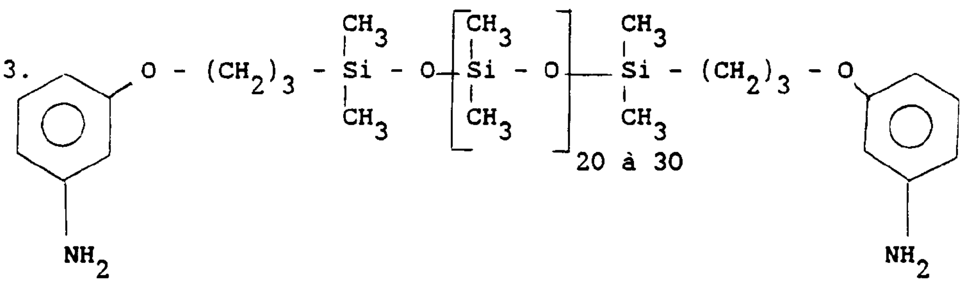

14. 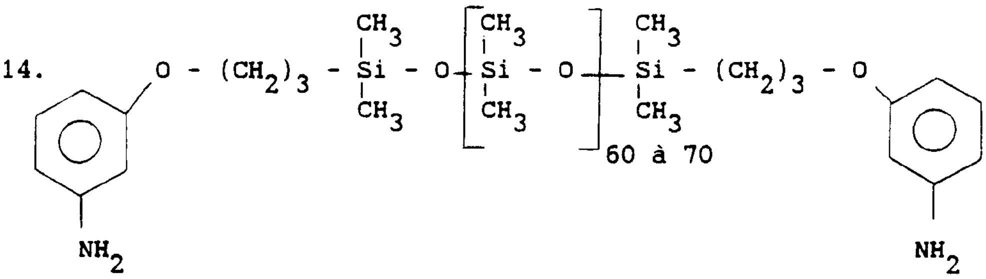

15. 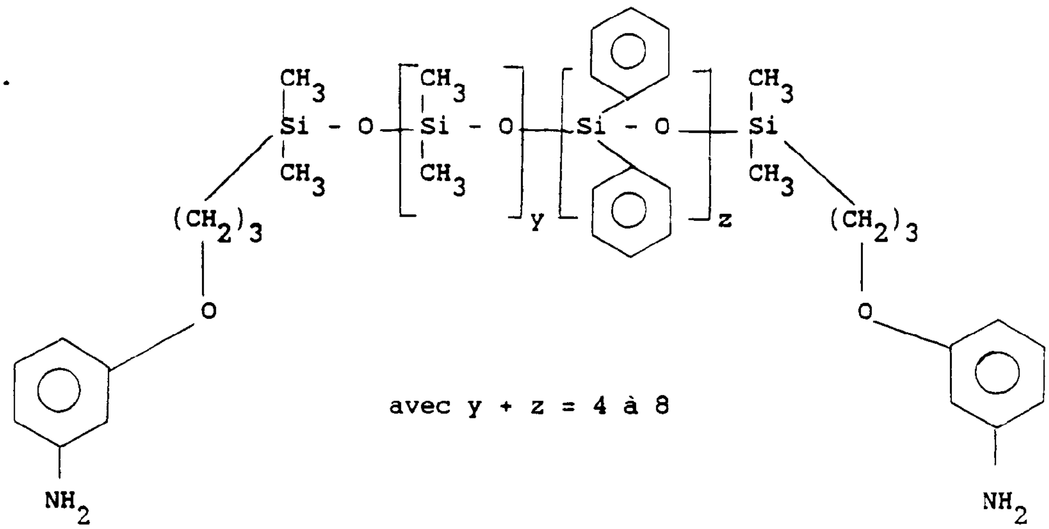

avec y + z = 4 à 8

16. 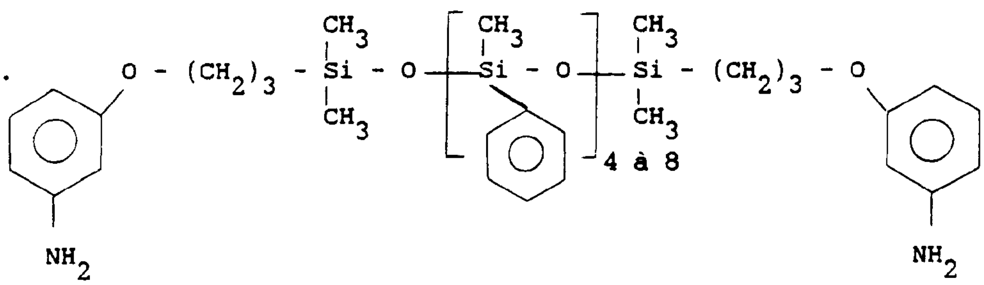

Pratiquement, pour la mise en oeuvre du procédé selon la présente invention, on charge d'abord dans le réacteur utilisé le réactif (a) sur lequel on additionne ensuite le catalyseur. Puis on introduit l'allyloxyaniline (b) dans la masse réactionnelle agitée ; cette introduction est opérée de manière progressive pour contrôler au mieux l'exothermicité de la réaction. De façon générale, la réaction d'hyrosilylation est réalisée à une température comprise entre 40° C et 120° C et, de préférence entre 50° C et 100° C en opérant sous une atmosphère inerte d'azote desséché. Une fois l'introduction d'allyloxyaniline terminée, on maintient le mélange réactionnel dans les conditions de température précitées pendant une durée au plus égale à 6 heures et, de préférence, comprise entre 20 minutes et 2 heures.

Les exemples suivants illustrent l'invention sans en limiter la portée.

EXEMPLE 1

Dans un réacteur en verre muni d'une agitation centrale, d'une ampoule de coulée et d'un réfrigérant ascendant dans lesquel on établit une légère surpression d'azote sec, on charge 45 g(0,0216 mole)d'un alpha,oméga-bis(hydrogéno)polydiorganosiloxane de formule :

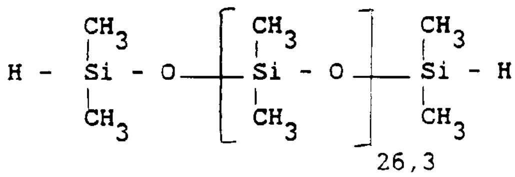

ayant une masse moléculaire de l'ordre de 2082 g.

On introduit ensuite le réacteur dans un bain d'huile préchauffé à 55° C, puis on additionne le catalyseur. Ce dernier est le catalyseur de Karsted (complexe à base de platine élémentaire et de ligands divinyl-1,3 tétraméthyl-1,1,3,3 disiloxane) : il est en solution dans le toluène (concentration de 3,5 % en poids) et on introduit avec une seringue 120 microlitres de cette solution de catalyseur ; le rapport r (poids de platine élémentaire

engagé/poids de la masse réactionnelle) est égal à $60.10^{-6}$.

Dans le réacteur, on coule ensuite progressivement 6,45 g (0,0432 mole) de métaallyloxyaniline, pendant une durée de 40 minutes, de façon à contrôler l'exothermicité de la réaction (on maintient la température à 55° C). Une heure après la fin de la coulée, on revient à température ambiante.Le produit obtenu d'un poids de 51,4 g est une huile visqueuse limpide, de couleur brun-orangé, présentant un spectre de RMN du proton en accord avec la structure:

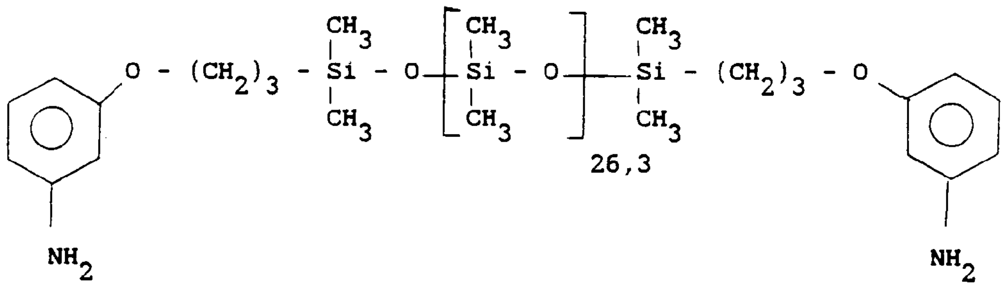

La masse moléculaire est de l'ordre de 2380 g. Dans ces conditions, le taux de transformation des réactifs engagés est de 100 % (par RMN et analyse infra-rouge, on ne détecte ni d'amine, ni d'oligomère siloxane hydrogéné) et le rendement en poids en diamine souhaitée est de 100 %.

EXEMPLE 2

Le mode opératoire est la même que celui décrit dans l'exemple 1, sauf en ce qui concerne les points suivants :

. on charge 20 g (0,004 mole) d'un alpha, oméga-bis(hydrogéno)polydiorganosiloxane de formule :

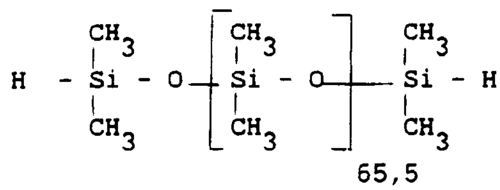

dont la masse moléculaire est de l'ordre de 4982 g ;

. on utilise 50 microlitres de la solution de catalyseur ; le rapport r (poids de platine élémentaire / poids de la masse réactionnelle) est égal à $64.10^{-6}$ ;

. on coule dans le réacteur, en 45 minutes, 1,2 g (0,008 mole) de métallyloxyaniline et on revient à température ambiante 30 minutes après la fin de la coulée de ce réactif.

Le produit obtenu, d'un poids de 21,1 g, est une huile visqueuse, orangée, présentant un spectre de RMN du proton en accord avec la structure :

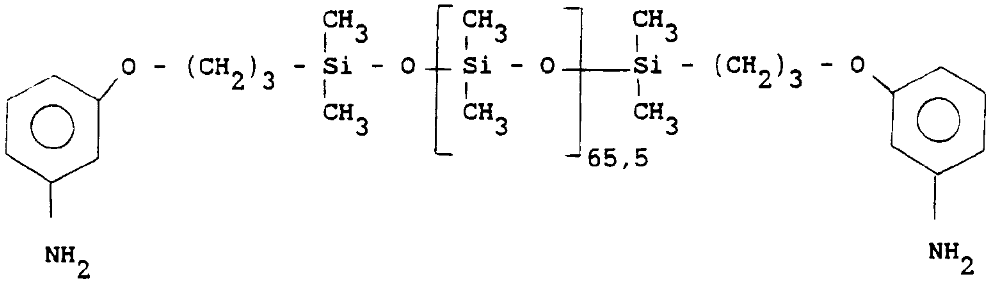

et ayant une masse moléculaire de l'ordre de 5280 g. Dans ces conditions, le taux de transformation des réactifs engagés est de 100 % (par RMN et analyse infra-rouge, on ne détecte ni d'amine, ni d'oligomère siloxane hydrogéné) et le rendement en poids en diamine souhaitée est de 100 %.

EXEMPLE 3

Le mode opératoire est le même que celui décrit dans l'exemple 1, sauf en ce qui concerne les points suivants :

. on charge 105 g (0.07 mole) d'un alpha, oméga-bis(hydrogéno)polydiorganosiloxane de formule :

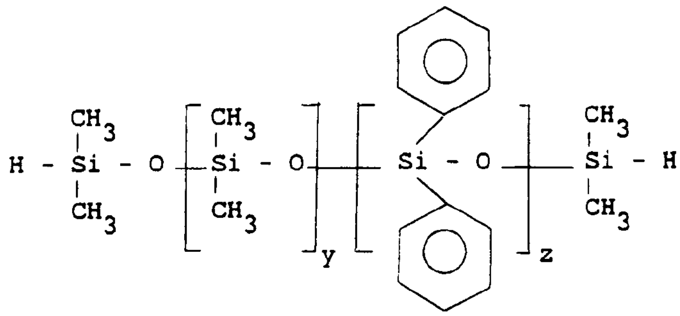

avec y + z = 4,99

dont la masse moléculaire est de l'ordre de 1492 g ;

. on utilise 350 microlitres de la solution de catalyseur ; le rapport r (poids de platine élémentaire / poids de la masse réactionnelle) est égal à $75.10^{-6}$ ;

. on coule dans le réacteur, en 50 minutes, 21 g (0,14 mole) de métaallyloxyaniline et on revient à température ambiante 30 minutes après la fin de la coulée de ce réactif.

Le produit obtenu, d'un poids de 125,3 g, est une huile visqueuse, brune, présentant un spectre de RMN du proton en accord avec la structure

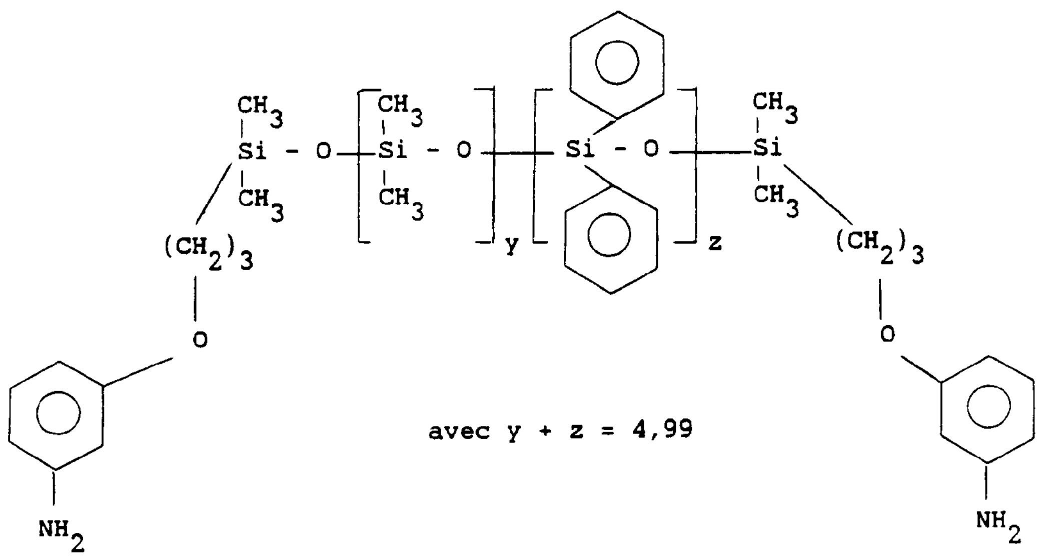

et ayant une masse moléculaire de l'odre de 1790 g. Dans ces conditions, le taux de transformation des réactifs engagés est de 100 % (par RMN et analyse infra-rouge ; on ne détecte ni d'amine, ni d'oligomère siloxane hydrogéne) et le rendement en poids en diamine souhaitée est de 100 %.

EXEMPLE 4

Le mode opératoire est le même que celui décrit dans l'exemple 1, sauf en ce qui concerne les points suivants :

. on charge 312 g (0,46 mole) d'un alpha, oméga-bis(hydrogéno)polydiorganosiloxane de formule :

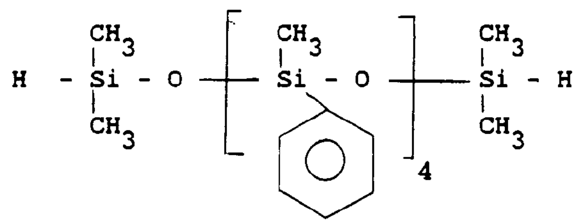

dont la masse moléculaire est de l'ordre de 678 g ;

. on utilise 1,49 $cm^3$ de la solution de catalyseur ; le rapport r (poids de platine élémentaire / poids de la masse réactionnelle) est égal à $91.10^{-6}$ ;

. on coule dans le réacteur, en 60 minutes, 137 g (0,92 mole) de métaallyloxyaniline et on revient à température ambiante 30 minutes après la fin de la coulée de ce réactif.

Le produit obtenu, d'un poids de 448,9 g, est une huile visqueuse , brun-orangé , présentant un spectre de RMN du proton en accord avec la structure :

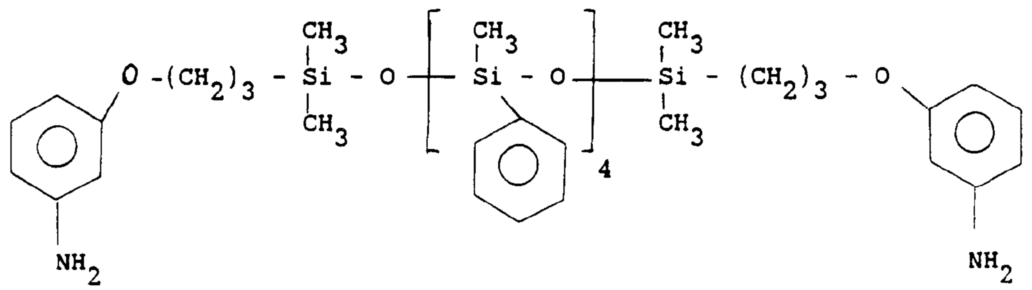

et ayant une masse moléculaire de l'ordre de 976 g. Dans ces conditions, le taux de transformation des réactifs engagés est de 100 % (par RMN et analyse infra-rouge ; on ne détecte ni d'amine, ne d'oligomère siloxane hydrogéné) et le rendement en poids en diamine souhaitée est de 100 %.

<u>EXEMPLE 5</u>

Le mode opératoire est le même que celui décrit dans l'exemple 1, sauf en ce qui concerne les points suivants :

. on charge 2 g ($9,6.10^{-4}$ mole) d'un alpha, oméga-bis(hydrogéno)polydiorganosiloxane de formule :

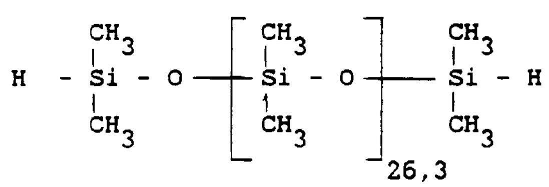

ayant une masse moléculaire de l'ordre de 2082 g ;

. on utilise 0,6 microlitres de la solution de catalyseur ; le rapport r (poids de platine élémentaire / Poids de la masse réactionnelle) est égal à $7.10^{-6}$ ;

. on coule dans le réacteur, en 10 minutes, 0,286 g ($1,92.10^{-3}$ mole) de métaallyloxyaniline et on suit le déroulement de la réaction par spectrométrie infra-rouge. Il faut environ 48 heures de réaction à 55° C pour voir disparaître totalement la bande Si-H en infra-rouge ($\gamma$ = 2150 $cm^{-1}$ et 920 $cm^{-1}$).

La diamine obtenue est celle décrite ci-avant à l'exemple 1.

## Revendications

1. Procédé de préparation de diamines à groupement polydiorganosiloxane de formule générale :

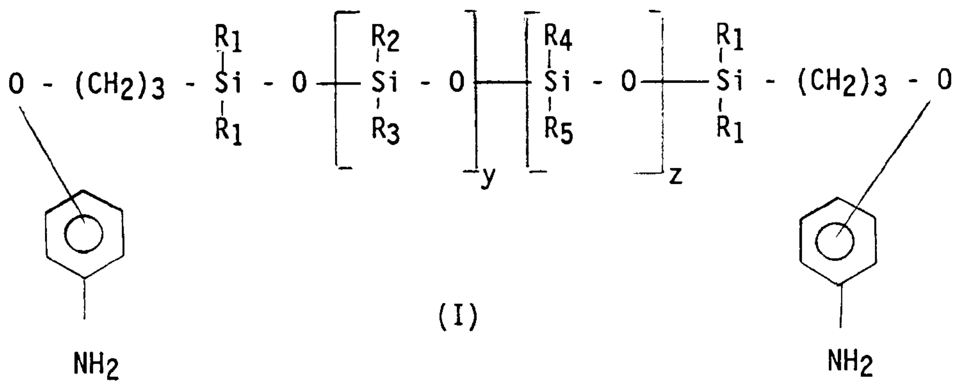

(I)

dans laquelle

. l'oxygène du groupe phénoxy alkyle est en position ortho, méta ou para par rapport à l'atome de carbone du cycle benzénique relié à l'azote ;

. $R_1$, $R_2$, $R_3$, $R_4$ et $R_5$ identiques ou différents, représentent chacun un radical hydrocarboné monovalent choisi parmi : les radicaux alkyles, linéaires ou ramifiés, ayant de 1 à 12 atomes de carbone, ces radicaux pouvant être substitués par un ou plusieurs atomes de chlore, de brome ou de fluor ou par groupement -CN ; un radical phényle éventuellement substitué par un ou plusieurs radicaux alkyles et/ou alkoxy ayant de 1 à 4 atomes de carbone ou par un ou plusieurs atomes de chlore ;

. les symboles y et z représentent des nombres, identiques ou différents, entiers ou fractionnaires, dont la somme est inférieure à 100 ;

ce procédé étant caractérisé en ce que l'on fait réagir directement:

– (a) un alpha, oméga-bis(hydrogéno)polydiorganosiloxane de formule :

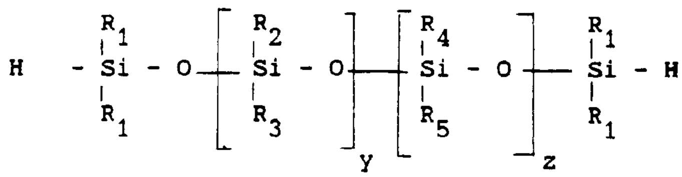 (II)

dans laquelle $R_1$, $R_2$, $R_3$, $R_4$, $R_5$, y et z ont les significations données ci-avant à propos de la formule (I),

– sur (b) une allyloxyaniline de formule :

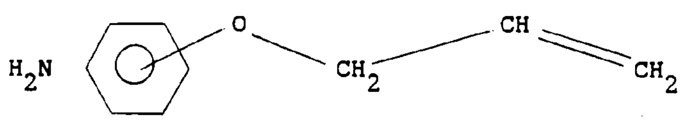 (III)

dans laquelle le radical allyloxy est en position ortho, méta ou para par rapport à l'atome de carbone du cycle benzénique relié à l'azote,

– cette réaction d'hydrosilylation étant conduite en opérant en masse en absence de solvant, à une température ne dépassant pas 120° C et en présence d'un catalyseur consistant dans un métal du groupe platine pris sous forme métallique ou sous forme d'un composé à base d'un métal du groupe du platine.

2. Procédé selon la revendication 1, caractérisé en ce que le réactif (b) est utilisé en quantités égales à deux moles par mole de réactif (a).

3. Procédé selon l'une quelconque des revendications 1 et 2, caractérisé en ce que le catalyseur consiste dans du platine pris sous forme métallique ou sous forme d'un composé à base de platine.

4. Procédé selon l'une quelconque des revendications 1 à 3, caractérisé en ce que la quantité de catalyseur utilisée est choisie de manière que le rapport r ci-après défini :

$$\frac{\text{poids de métal élémentaire du groupe du platine contenu dans le catalyseur}}{\text{poids total des réactifs (a) + (b)}}$$

se situe dans l'intervalle allant de $7.10^{-6}$ à $200.10^{-6}$.

5. Procédé selon l'une quelconque des revendications 1 à 4, caractérisé en ce que, pratiquement, on

charge d'abord dans le réacteur utilisé le réactif (a) sur lequel on additionne ensuite le catalyseur, puis on introduit progressivement l'allyloxyaniline (b) dans la masse réactionnelle agitée.

## Claims

1. Process for the preparation of diamines containing a polydiorganosiloxane group, of general formula:

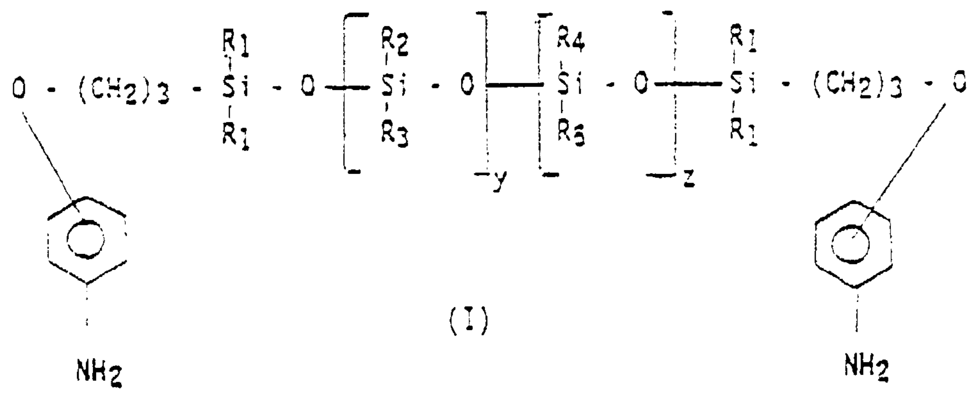

(I)

in which:

. the oxygen of the phenoxyalkyl group is in the ortho, meta or para position relative to the carbon atom of the benzene ring linked to nitrogen;

. $R_1$, $R_2$, $R_3$, $R_4$ and $R_5$, which may be identical or different, each represent a monovalent hydrocarbon radical chosen from amongst: straight-chain or branched alkyl radicals containing from 1 to 12 carbon atoms, it being possible for these radicals to be substituted by one or more chlorine, bromine or fluorine atoms or by a -CN group; a phenyl radical optionally substituted by one or more alkyl and/or alkoxy radicals containing from 1 to 4 carbon atoms; and

. the symbols y and z represent integers or fractions, which may be identical or different, the sum of which is less than 100;

this process being characterised in that:

– (a) an alpha, omega-bis(hydro)polydiorganosiloxane of formula:

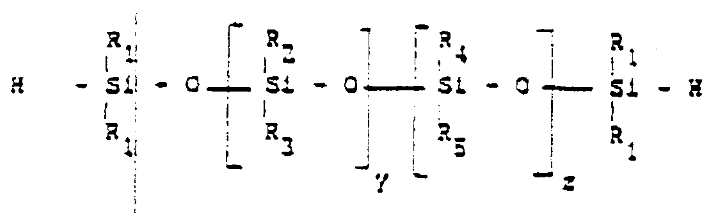

(II)

in which $R_1$, $R_2$, $R_3$, $R_4$, $R_5$, y and z have the meanings given above in connection with formula (I), is directly reacted

– with (b) an allyloxyaniline of formula:

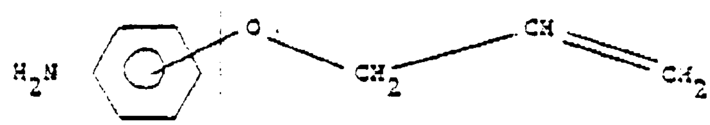

(III)

in which the allyloxy radical is in the ortho, meta or para position relative to the carbon atom of the benzene ring linked to nitrogen,

– this hydrosilylation reaction being carried out operating in bulk in the absence of a solvent, at a temperature not exceeding 120°C and in the presence of a catalyst consisting of a platinum group metal used in the metallic form or in the form of a compound based on a platinum group metal.

2. Process according to Claim 1, characterised in that reagent (b) employed in quantities equal to two moles

per mole of reagent (a).

3. Process according to either of Claims 1 and 2, characterised in that the catalyst consists of platinum used in the metallic form or in the form of a platinum-based compound.

4. Process according to any one of Claims 1 to 3, characterised in that the quantity of catalyst employed is chosen so that the ratio r defined below:

$$\frac{\text{weight of platinum group metal element contained in the catalyst}}{\text{total weight of reagents (a) + (b)}}$$

is within the range from $7\times10^{-6}$ to $200\times10^{-6}$.

5. Process according to any one of Claims 1 to 4 characterised in that, in practice, reagent (a) is first charged into the reactor employed and the catalyst is then added thereto and the allyloxyaniline (b) is then gradually introduced into the reaction mass which is stirred.

## Patentansprüche

1. Verfahren zur Herstellung von Diaminen mit einer Polydiorganosiloxangruppe der allgemeinen Formel

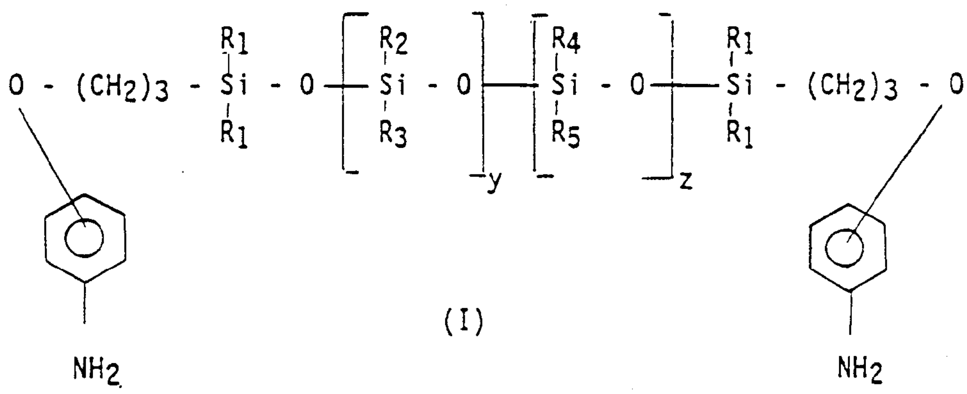

(I)

worin

. der Sauerstoff der Phenoxyalkylgruppen sich in ortho-, meta- oder para-Stellung in bezug auf das an den Stickstoff gebundene Kohlenstoffatom des Benzolrings befindet;

. $R_1$, $R_2$, $R_3$, $R_4$ und $R_5$, die gleich oder verschieden sind, jeweils einen einwertigen Kohlenwasserstoffrest bedeuten, ausgewählt unter: den linearen oder verzweigten Alkylresten mit 1 bis 12 Kohlenstoffatomen, wobei diese Reste durch ein oder mehrere Chlor-, Brom- oder Fluoratome oder durch die Gruppe - CN substituiert sein können; einem gegebenenfalls durch einen oder mehrere Alkyl- und/oder Alkoxyreste mit 1 bis 4 Kohlenstoffatomen oder durch ein oder mehrere Chloratome substituierten Phenylrest;

. die Symbole u und z gleiche oder verschiedene ganze oder Bruchzahlen wiedergeben, deren Summe geringer als 100 ist;

wobei das Verfahren dadurch gekennzeichnet ist, daß man direkt umsetzt:

– (a) ein $\alpha$, $\omega$ -Bis-(hydrogeno)-polydiorganosiloxan der Formel

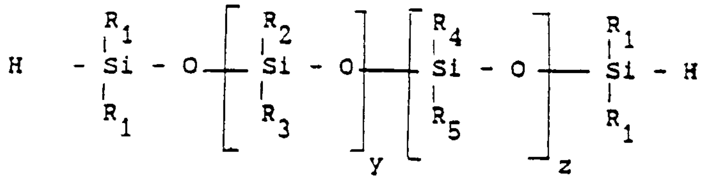

(II)

worin $R_1$, $R_2$, $R_3$, $R_4$, $R_5$, y und z die vorstehend für die Formel (I) angegebenen Bedeutungen besitzen, mit

– (b) einem Allyloxyanilin der Formel

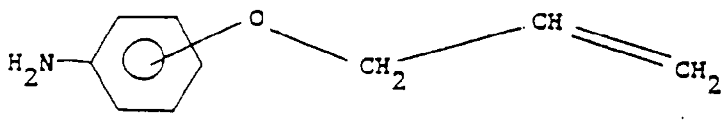

(III)

worin sich der Allyloxyrest in ortho-, meta- oder para- Stellung in bezug auf das an den Stickstoff gebundene Kohlenstoffatom des Benzolrings befindet,

wobei diese Hydrosilylierungsreaktion unter Arbeiten in Masse in Abwesenheit von Lösungsmittel bei einer Temperatur, die 120°C nicht überschreitet, und in Anwesenheit eines Katalysators, der aus einem Metall der Platingruppe in metallischer Form oder in Form einer Verbindung auf Basis eines Metalls der Platingruppe besteht, durchgeführt wird.

2. Verfahren gemäß Anspruch 1; dadurch gekennzeichnet, daß das Reagens (b) in Mengen verwendet wird, die 2 Mol/Mol Reagens (a) entsprechen.

3. Verfahren gemäß einem der Ansprüche 1 und 2, dadurch gekennzeichnet, daß der Katalysator aus Platin in metallischer Form oder in Form einer Verbindung auf Platin-Basis besteht.

4. Verfahren gemäß einem der Ansprüche 1 bis 3, dadurch gekennzeichnet, daß die Menge des verwendeten Katalysators derart gewählt wird, daß das nachstehend definierte Verhältnis r

$$\frac{\text{Gewicht des in dem Katalysator enthaltenen, elementaren Metalls der Platingruppe}}{\text{Gesamtgewicht der Reagentien (a) + (b)}}$$

im Bereich von $7 \times 10^{-6}$ bis $200 \times 10^{-6}$ liegt.

5. Verfahren gemäß einem der Ansprüche 1 bis 4, dadurch gekennzeichnet, daß man in der Praxis zunächst in den verwendeten Reaktor das Reagens (a) zuführt, das man hierauf mit dem Katalysator versetzt, wonach man allmählich das Allyloxyanilin (b) in die gerührte Reaktionsmasse einbringt.